# EUROPÄISCHE PATENTSCHRIFT

(11) **EP 2 957 681 B1**
(45) Veröffentlichungstag und Bekanntmachung des Hinweises auf die Patenterteilung: **24.06.2020**
(21) Anmeldenummer: 15001581.6
(22) Anmeldetag: 26.02.2014
(51) Int. Cl.: E03C 1/04

(54) **SANITÄRARMATUR MIT INNENSCHLAUCHANORDNUNG**
SANITARY FITTING WITH INTERNAL HOSE ASSEMBLY
ROBINETTERIE SANITAIRE A SYSTEME DE TUYAU INTERNE

(30) Priorität: 08.03.2013 DE 202013002188 U
(43) Veröffentlichungstag der Anmeldung: 23.12.2015
(62) Teilanmeldung aus: 14000691.7
(73) Patentinhaber: Neoperl GmbH, 79379 Müllheim (DE)
(72) Erfinder: Schürle, Holger, 79379 Mülheim (DE)
(74) Vertreter: Börjes-Pestalozza, Henrich

(56) Entgegenhaltungen:
- EP-A1- 1 686 218
- EP-A1- 2 112 281
- EP-A2- 2 497 866
- DE-A1- 3 513 840
- DE-A1- 10 052 500

## Beschreibung

Die Erfindung betrifft ein sanitäres Einbauteil mit einer Grundplatte, die eine erste Aufnahme für ein Kaltwasserschlauchendstück und eine zweite Aufnahme für ein Warmwasserschlauchendstück aufweist, und mit einem Adpaterstück, das an einer ersten Seite eine Grundplattenaufnahme für die Grundplatte aufweist und an einer zweiten Seite als vorzugsweise planes Verbindungsmittel zum Anschluss einer Einhebel-Mischkartusche ausgebildet ist, wobei an der Grundplatte ein Anschlussstück schwenkbar befestigt ist, welches einen Innenkanal aufweist, der an einem ersten Ende an dem Verbindungsmittel und an einem zweiten Ende an einem Schlauchanschluss mündet, wobei das Anschlussstück in einem das erste Ende des Verbindungskanals enthaltenden Anschlussbereich mit dem Verbindungsmittel über eine Anschlussstückaufnahme des Adapterstücks steckverbunden ist, welcher Anschlussstückaufnahme ein zum Verbindungsmittel mündender Verbindungsgang erster Art zugeordnet ist, und wobei den Schlauchaufnahmen je ein zum Verbindungsmittel mündender Verbindungsgang zweiter Art zugeordnet ist.

Derartige sanitäre Einbauteile sind bekannt und werden verwendet, um die Zulaufschläuche, die Einhebel-Mischkartusche und ein an einen Verbindungsschlauch angeordnetes Auslaufmundstück miteinander in einer Sanitärarmatur zu verbinden.

So kennt man aus der EP 2497866 A2 eine Sanitärarmatur, in deren Armaturenkorpus ein sanitäres Einbauteil der eingangs erwähnten Art eingesetzt ist. Das vorbekannte Einbauteil weist ein Zwischenstück mit einer einstückig daran angeformten Scheibe auf, wobei das Zwischenstück über Befestigungsschrauben auch mit einer oberen Scheibe verbunden ist. Im Zwischenstück und in der oberen Scheibe sind jeweils Durchleitungsrohre bzw. Wasserdurchtrittsöffnungen angeordnet, durch die Zulaufrohre für das kalte und das warme Wasser hindurchgeführt sind. Diese Zulaufrohre sind mittels einer geeigneten Haltescheibe in dem Batteriekörper festgelegt, ohne an entsprechenden Aufnahmen des Zwischenstücks gehalten zu sein. Die mit dem Zwischenstück verbundene obere Scheibe bildet ein Verbindungsmittel für eine darüber liegende Einhebel-Mischkartusche. Zwischen dem Zwischenstück und der oberen Scheibe ist ein hülsenförmiger Wasserverteilring mit einem Schlauchstutzen drehbar eingespannt. Dabei mündet dieser Schlauchstutzen an seinem dem Schlauch abgewandten Stutzenende im Hülseninneren des Wasserverteilungsrings.

Die Erfindung betrifft weiter eine Innenschlauchanordnung für eine Sanitärarmatur mit einem sanitären Einbauteil der eingangs erwähnten Art.

Innenschlauchanordnungen für Sanitärarmaturen sind bekannt und werden eingesetzt, um einen direkten Kontakt des fließenden Wassers mit einer metallischen Oberfläche der Sanitärarmatur zu vermeiden.

Der Erfindung liegt die Aufgabe zugrunde, einen Einsatz einer Innenschlauchanordnung bei einer Sanitärarmatur mit einer Einhebel-Mischkartusche zu ermöglichen.

Zur Lösung dieser Aufgabe sieht die Erfindung die Merkmale von Anspruch 1 vor. Insbesondere schlägt die Erfindung somit bei einem sanitären Einbauteil der eingangs beschriebenen Art vor, dass der Verbindungsgang erster Art in dem Adapterstück windschief kreuzend zu den Verbindungsgängen zweiter Art verläuft.
Bei dem erfindungsgemäßen sanitären Einbauteil ist an der Grundplatte ein Anschlussstück schwenkbar befestigt, welches einen Innenkanal aufweist, der an einem ersten Ende an dem Verbindungsmittel und an einem zweiten Ende an einem Schlauchanschluss mündet. Von Vorteil ist dabei, dass das sanitäre Einbauteil zum Einsatz in einer Sanitärarmatur mit einem Schwenkarm, an welchem ein Auslaufmundstück befestigt ist, eingerichtet ist. Denn die schwenkbare Befestigung des Anschlussstückes ermöglicht eine Bewegung des Schwenkarms bei festgehaltener Einhebel-Mischkartusche. Das Anschlussstück ist in einem das erste Ende des Verbindungskanals enthaltenden Anschlussbereich mit dem Verbindungsmittel über eine Anschlussstückaufnahme eines Adapterstücks steckverbunden. Von Vorteil ist dabei, dass eine einfache Montage ermöglicht ist. Dabei weist das Adapterstück an einer ersten Seite eine Grundplattenaufnahme für die Grundplatte auf und ist an einer zweiten Seite als vorzugsweise planes Verbindungsmittel zum Anschluss einer Einhebel-Mischkartusche ausgebildet. Somit ist das Adapterstück zwischen der Grundplatte und der Einhebel-Mischkartusche anordenbar. Von Vorteil ist dabei, dass das Verbindungsmittel als standardisierte Schnittstelle für eine Einhebel-Mischkartusche ausführbar ist. Von Vorteil ist dabei weiter, dass eine Anpassung an individuelle Einhebel-Mischkartuschen lediglich eine Änderung in dem Adapterstück notwendig macht, so dass die übrigen Teile des sanitären Einbauteils unverändert bleiben können. Bevorzugt ist das Verbindungsmittel plan ausgebildet, um an handelsübliche Einhebel-Kartuschen anschließbar zu sein. Von Vorteil ist weiter, dass die Steckverbindung als Gegenlager eines Schwenklagers ausführbar ist. Da die Anschlussstückaufnahme als Schwenklager für das Anschlussstück ausgebildet ist, ist eine zweiseitige schwenkbare Befestigung des Anschlussstücks ausführbar. Somit ist das Anschlussstück axial bezüglich der Schwenkachse festlegbar, wobei die Schwenkbewegung ungehindert ermöglicht ist. Erfindungsgemäß ist vorgesehen, dass der Anschlussstückaufnahme ein zum Verbindungsmittel mündender Verbindungsgang erster Art zugeordnet ist, der in dem Adapterstück windschief, d.h. im Aufriss kreuzend zu Verbindungsgängen zweiter Art verläuft, und dass den Schlauchaufnahmen jeweils einer der zum Verbindungsmittel mündenden Verbindungsgänge zweiter Art zugeordnet ist. Von Vorteil ist dabei, dass die Schlauchanschlüsse an die Einhebel-Mischkartusche führbar sind. Da der Verbindungsgang erster Art in dem Adapterstück windschief kreuzend zu den Verbindungsgängen zweiter Art verläuft, ist ermöglicht, das Anschlussstück in der Einbauposition an der dem Auslauf-Mundstück zugewandten Seite des sanitären Einbauteils anzuordnen. Denn die handelsüblichen Einhebel-Mischkartuschen weisen die Eigenschaft auf, dass die Zuläufe in Einbauposition an der dem Auslauf-Mundstück zugewandten Seite angeordnet sind, während der Auslass der Einhebel-Mischkartusche an der von dem Auslauf-Mundstück abgewandten Seite, also hinter den Zuläufen, angeordnet ist. Durch die kreuzende Anordnung wird erreicht, dass dieser Auslass zum schwenkbaren Anschlussstück an den Zuläufen vorbeigeführt ist.

Bei einer Ausgestaltung der Erfindung kann vorgesehen sein, dass der Innenkanal zwischen dem ersten Ende und dem zweiten Ende in einem Winkel geführt ist. Von Vorteil ist dabei, dass mit einem Ende des Anschlussstücks eine Schwenkachse definierbar ist, um welche das andere Ende des Anschlussstücks schwenkbar ist. Hierdurch kann der Schlauchanschluss eine Schwenkbewegung eines Schwenkarms nachvollziehen. Die schwenkbare Ausbildung des Anschlussstücks hat den weiteren Vorteil, dass eine überschüssige Länge eines an den Schlauchanschluss angeschlossenen Verbindungsschlauchs aufnehmbar ist, indem das Anschlussstück aus der direkten Verbindungslinie zu einem Auslauf-Mundstück herausgeschwenkt wird.

Bei einer Ausgestaltung der Erfindung kann vorgesehen sein, dass an dem Anschlussstück ein Zapfen ausgebildet ist, welcher mit einer passenden Zapfenaufnahme der Grundplatte eine Schwenklagerung bildet. Von Vorteil ist dabei, dass eine einfache schwenkbare Befestigung gebildet ist. Günstig ist es dabei, wenn der Zapfen in einer Verlängerung des ersten Endes ausgebildet ist. Somit definiert das erste Ende eine Schwenkachse, und es ist erreichbar, dass das erste Ende während des Schwenkens ortsfest verbleibt. Hierdurch ist ein dichter Anschluss des Anschlussstücks an dem Verbindungsmittel ermöglicht. Bevorzugt ist der Zapfen mit einer Rastnase versehen, um in der Zapfenaufnahme formschlüssig gehalten zu sein. Hierbei kann vorgesehen sein, dass der Zapfen geschlitzt ausgeführt ist, um diese formschlüssige Verbindung lösen zu können.

Bei einer Ausgestaltung der Erfindung kann vorgesehen sein, dass die Zapfenaufnahme parallel zu einer Längsachse des Einbauteils ausgerichtet ist. Von Vorteil ist dabei, dass das Anschlussstück leicht in die Zapfenaufnahme einsetzbar ist, da die Montagerichtung des sanitären Einbauteils typischerweise durch dessen Längsachse gegeben ist.

Die Anschließbarkeit an eine Einhebel-Mischkartusche ist dadurch realisierbar, dass das Verbindungsmittel drei Anschlussöffnungen aufweist, welche passend zu entsprechenden drei Anschlussöffnungen der Einhebel-Mischkartusche ausgebildet und angeordnet sind.

Besonders günstig ist es dabei, wenn der Zapfen und der Anschlussbereich des Anschlussstücks zueinander koaxial ausgerichtet sind. Von Vorteil ist dabei, dass eine gemeinsame Schwenkachse definierbar ist.

Zur Fixierung der Schlauchendstücke kann vorgesehen sein, dass an der Grundplatte eine quer zu einer Einsteckrichtung des Kaltwasserschlauchendstücks und des Warmwasserschlauchendstücks einsetzbare Sicherungsplatte angeordnet ist. Bevorzugt ist diese Sicherungsplatte quer zu einer Einsteckrichtung des Kaltwasserschlauchendstücks und des Warmwasserschlauchendstücks einsetzbar. Von Vorteil ist dabei, dass die Schlauchendstücke mit ringförmigen Vorsprüngen oder Nuten ausführbar sind, welche durch die Sicherungsplatte zur Fixierung in Einsteckrichtung hintergreifbar sind.

In dem Adapterstück ist wenigstens einer der Verbindungsgänge ausgebildet, der bezüglich einer Längsachse schräg verlaufend angeordnet ist und der das Verbindungsmittel mit der Grundplattenaufnahme verbindet. Von Vorteil ist dabei, dass die Anschlüsse von der Grundplattenaufnahme zu dem Verbindungsmittel und somit weiter zur Einhebel-Mischkartusche führbar sind. Bevorzugt sind für die zwei Zulaufschläuche zwei Verbindungsgänge und für den Abfluss zum Auslauf-Mundstück ein weiterer Verbindungsgang in dem Adapterstück ausgebildet. Durch die Ausbildung von Verbindungsgängen in dem Adapterstück ist es ermöglicht, die einheitliche Grundplattenaufnahme an verschiedene Verbindungsmittel für unterschiedliche Arten von Einhebel-Mischkartuschen anzupassen.

Bei einer Ausgestaltung der Erfindung kann vorgesehen sein, dass der Schlauchanschluss als Schlauchnippel oder Olive ausgebildet ist. Von Vorteil ist dabei, dass ein Verbindungsschlauch einfach und sicher anschließbar ist.

Bei einer Ausgestaltung der Erfindung kann vorgesehen sein, dass die Schlauchaufnahmen und/oder die Anschlussstückaufnahme jeweils einen Dichtring aufweist/aufweisen. Von Vorteil ist dabei, dass ein dichter Abschluss des wasserführenden Systems ermöglicht ist, der gleichzeitig eine Beweglichkeit des Anschlussstücks bewahrt.

Bei einer Ausgestaltung der Erfindung kann vorgesehen sein, dass an der Grundplatte und/oder dem Adapterstück eine Aussparung ausgebildet ist, welche einen verfügbaren Schwenkwinkel für das Anschlussstück begrenzt. Von Vorteil ist dabei, dass Raum geschaffen ist für die Schwenkbewegung. Bevorzugt ist die Aussparung keilförmig ausgebildet, um einen definierten maximalen Schwenkwinkel bereitzustellen.

Bei einer Ausgestaltung der Erfindung kann vorgesehen sein, dass an der Grundplatte eine Verdrehsicherung ausgebildet ist. Dies kann beispielsweise eine unrunde Verdrehsicherung sein. Von Vorteil ist dabei, dass ein Mitdrehen des sanitären Einbauteils bei einem Schwenken eines Schwenkarms einer Sanitärarmatur vermeidbar ist.

Bei einer Ausgestaltung der Erfindung kann vorgesehen sein, dass die Grundplatte und/oder das Adapterstück aus Kunststoff gefertigt ist/sind. Von Vorteil ist dabei, dass eine einfache Formgestaltung der Einzelteile des sanitären Einbauteils ermöglicht ist. Dies ermöglicht die Fertigung und senkt die Fertigungskosten. Die Grundplatte und/oder das Adapterstück können auch aus Metall gefertigt sein, beispielsweise um eine erhöhte Standfestigkeit zu erreichen.

Alternativ oder zusätzlich kann vorgesehen sein, dass die Sicherungsplatte aus Metall gefertigt ist. Von Vorteil ist dabei, dass ein sicherer, verschleißarmer Halt der Kaltwasser- und Warmwasserschlauchendstücke ermöglicht ist. Die Sicherungsplatte kann auch aus Kunststoff gefertigt sein, um Fertigungskosten einzusparen und/oder Korrosion zu vermeiden.

Das sanitäre Einbauteil kann somit vollständig aus Kunststoff oder vollständig aus Metall gefertigt sein, oder es kann eine Fertigung einzelner Teile aus Kunststoff und der übrigen Teile aus Metall oder einem sonstigen Werkstoff, beispielsweise Holz oder anderen nachwachsenden Rohstoffen, realisiert sein.

Zur Lösung der oben genannten Aufgabe ist bei einer Innenschlauchanordnung für eine Sanitärarmatur, mit einem sanitären Einbauteil der eingangs erwähnten Art, erfindungsgemäß vorgesehen, dass an den Schlauchanschluss des sanitären Einbauteiles ein flexibler Verbindungsschlauch angeschlossen ist. Bevorzugt weist die erfindungsgemäße Innenschlauchanordnung ein erfindungsgemäßes sanitäres Einbauteil, insbesondere wie zuvor beschrieben, auf. Von Vorteil ist dabei, dass die Innenschlauchanordnung den vergleichsweise beengten Verhältnissen einer Sanitärarmatur leicht montierbar ist, da der flexible Verbindungsschlauch während der Montage nach Bedarf biegbar ist. Von Vorteil ist weiter, dass der flexible Verbindungsschlauch in gewissem Umfang eine Schwenkbewegung eines ein Auslauf-Mundstück tragenden Schwenkarms gestattet. Bevorzugt ist der Verbindungsschlauch an dem Schlauchanschluss des erfindungsgemäßen sanitären Einbauteils angeschlossen. Besonders günstig ist es hierbei, wenn der Verbindungsschlauch lösbar angeschlossen ist, um ein Auswechseln zu ermöglichen.

Bei einer Ausgestaltung der Erfindung kann vorgesehen sein, dass an einem vom Schlauchanschluss abgewandten Ende des Verbindungsschlauchs ein Auslauf-Mundstück angeschlossen ist. Von Vorteil ist dabei, dass eine fertig einbaubare Innenschlauchanordnung bereitgestellt ist. Besonders günstig ist es hierbei, wenn das Auslauf-Mundstück lösbar angeschlossen ist.

Hierbei kann vorgesehen sein, dass eine maximale Außenabmessung des Auslauf-Mundstücks auf eine maximale Außenabmessung des Anschlussstücks abgestimmt ist. Von Vorteil ist dabei, dass das Anschlussstück durch eine Öffnung, in welche das Auslauf-Mundstück passt, hindurchführbar ist. Dies erleichtert die Montage der vormontierten Innenschlauchanordnung bei einer Sanitärarmatur, wobei das Auslauf-Mundstück in eine Auslauföffnung eingesetzt wird, durch welche zuvor das Anschlussstück geführt wurde.

Bei einer Ausgestaltung der Erfindung kann vorgesehen sein, dass der Verbindungsschlauch wenigstens einen längenveränderbaren und/oder knickbaren Axialabschnitt aufweist. Von Vorteil ist dabei, dass die Lage und/oder Länge des Verbindungsschlauchs nach der Montage an der vormontierten Innenschlauchanordnung einfach an die Verhältnisse der Sanitärarmatur anpassbar ist/sind. Beispielsweise kann vorgesehen sein, dass der Axialabschnitt faltenbalgartig gefaltet ist.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt
- Fig. 1: eine erfindungsgemäße Sanitärarmatur mit montiertem erfindungsgemäßen sanitären Einbauteil,
- Fig. 2: eine weitere erfindungsgemäße Sanitärarmatur mit Schwenkarm und montiertem erfindungsgemäßen sanitären Einbauteil,
- Fig. 3: eine Einzelheit der Sanitärarmatur gemäß Fig.2,
- Fig. 4: ein erfindungsgemäßes sanitäres Einbauteil in Explosionsdarstellung,
- Fig. 5: das erfindungsgemäße sanitäre Einbauteil gemäß Fig.4 mit in einer Richtung ausgerichtetem Anschlussstück,
- Fig. 6: das sanitäre Einbauteil gemäß Fig.5 mit in eine andere Richtung geschwenktem Anschlussstück,
- Fig. 7: die Ausbildung von Verbindungsgängen zweiter Art bei dem Adapterstück des sanitären Einbauteils gemäß Fig. 4 bis 6,
- Fig. 8: das Adapterstück gemäß Fig.7 in einer Schnittdarstellung,
- Fig. 9: das Adapterstück gemäß Fig.7 mit eingezeichnetem Verbindungsgang erster Art,
- Fig. 10: Eine Schnittdarstellung des Adapterstücks gemäß Fig.9,
- Fig. 11 bis Fig. 16: Montageschritte bei einer erfindungsgemäßen Montage einer erfindungsgemäßen Innenschlauchanordnung,
- Fig. 17: eine weitere erfindungsgemäße Innenschlauchanordnung in Exklusionsdarstellung,
- Fig. 18: die Innenschlauchanordnung gemäß Fig.17 in vormontiertem Zustand und
- Fig. 19 bis Fig. 23: Montageschritte bei einer Montage der Innenschlauchanordnung gemäß Fig.18.

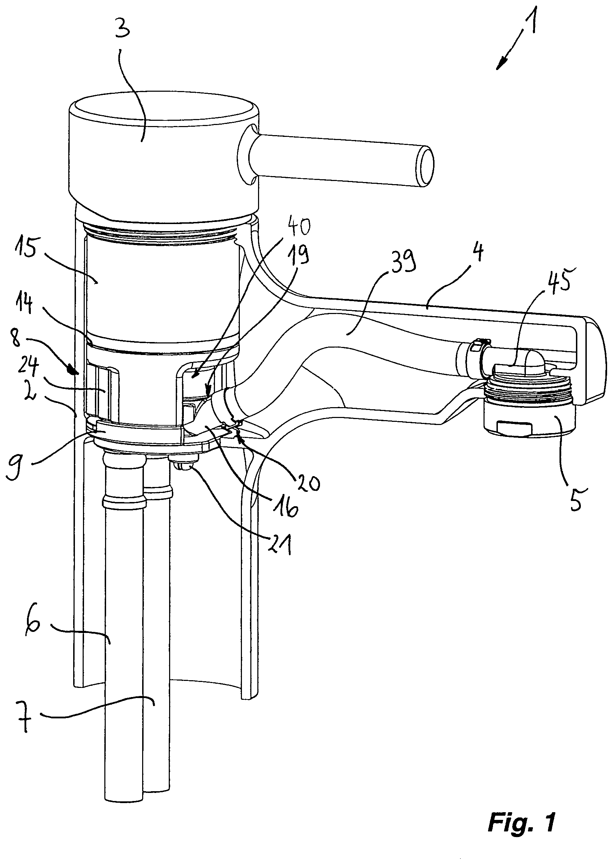

Fig. 1 zeigt eine im Ganzen mit 1 bezeichnete Sanitärarmatur.

Die Sanitärarmatur 1 hat einen Armaturenkörper 2 und einen Handhebel 3.

In einem festen Arm 4 ist ein Auslauf-Mundstück 5 angeordnet.

Von unten sind in dem Armaturenkörper 2 ein Kaltwasserschlauch 6 und ein Warmwasserschlauch 7 eingeführt.

Mit dem Handhebel 3 sind die Menge und das Mischungsverhältnis von Warmwasser zu Kaltwasser an dem Auslauf-Mundstück 5 einstellbar.

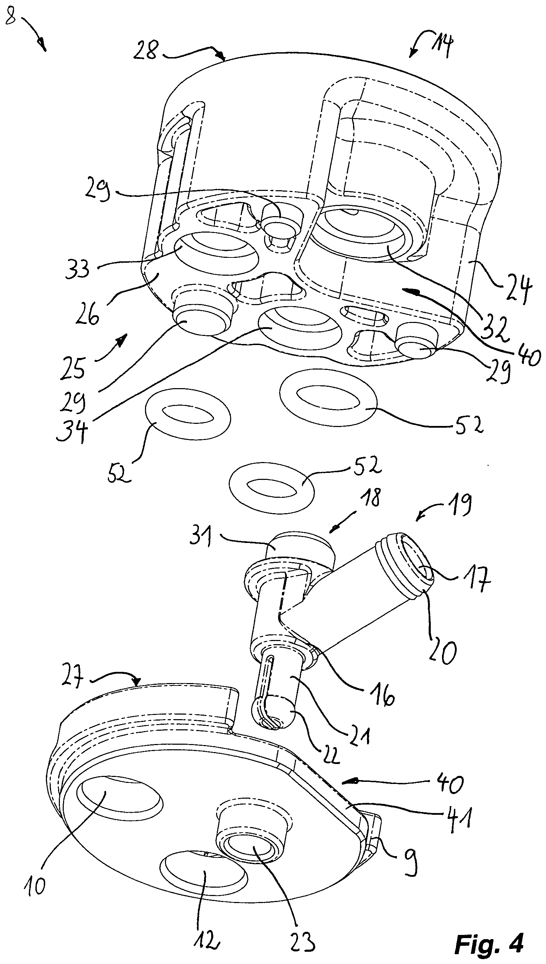

Hierzu ist in dem Armaturenkörper 2 der sanitären Armatur 1 ein erfindungsgemäßes sanitäres Einbauteil 8 eingesetzt, welches in den Figuren 4 bis 8 näher gezeigt und erläutert ist.

Das sanitäre Einbauteil 8 hat eine Grundplatte 9, in welcher eine erste Aufnahme 10 (vgl. Fig. 4) für ein Kaltwasserschlauchendstück 11 ausgebildet ist.

In die erste Aufnahme 10 ist somit der Kaltwasserschlauch 6 einführbar.

Die Grundplatte 9 weist eine zweite Aufnahme 12 auf, in welche ein Warmwasserschlauchendstück 13 des Warmwasserschlauchs 7 einführbar ist.

Die Aufnahmen 10, 12 sind als Bohrungen oder sonstige zylindrische Öffnungen ausgebildet.

An dem sanitären Einbauteil 8 ist in Gebrauchsposition an der oberen Seite ein Verbindungsmittel 14 in Form einer planen Anschlussfläche ausgebildet.

Das Verbindungsmittel 14 ist so eingerichtet und ausgebildet, dass eine Einhebel-Mischkartusche 15 dicht aufsetzbar ist.

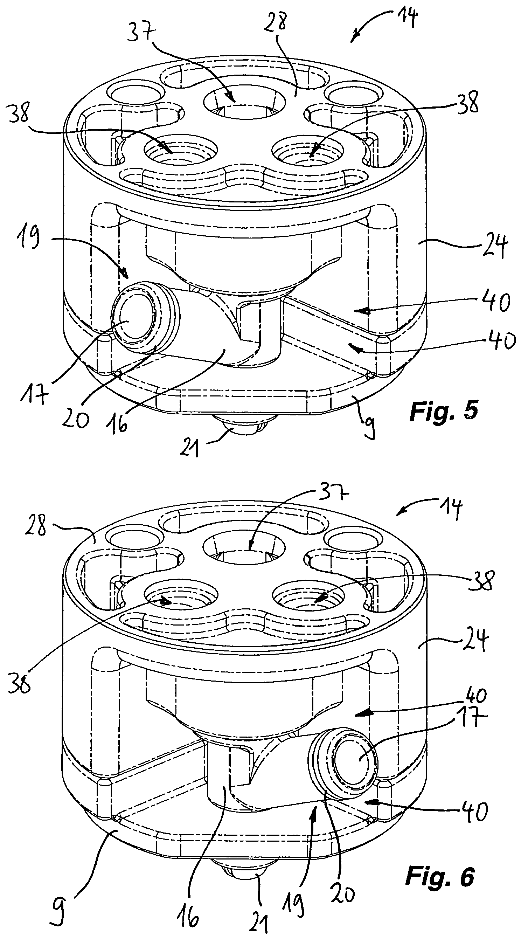

An der Grundplatte 9 ist ein Anschlussstück 16 schwenkbar angeordnet. Das Anschlussstück 16 weist einen durchgehenden Innenkanal 17 (s. Fig. 5 und 6) auf, welcher an einem ersten Ende 18 des Anschlussstücks 16 in noch näher zu beschreibender Weise an dem Verbindungsmittel 14 mündet.

Der Innenkanal 17 mündet an einem zweiten Ende 19 in einen Schlauchanschluss 20.

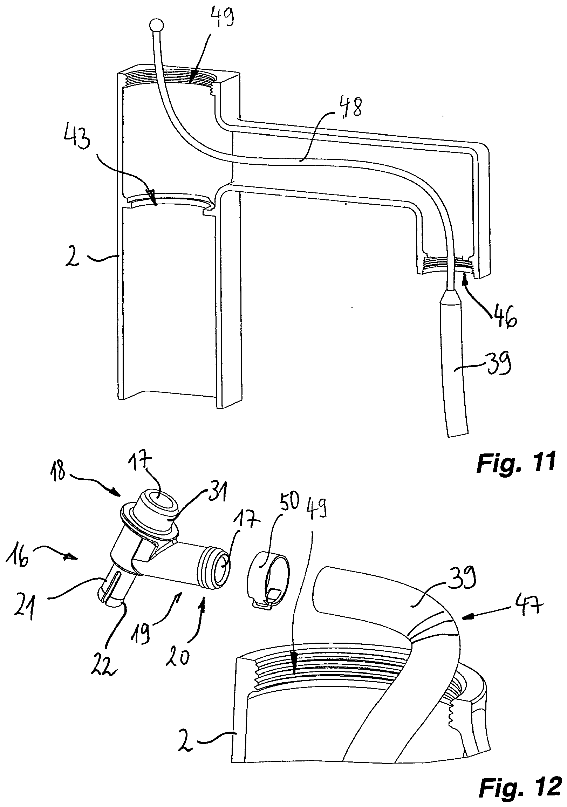

Fig. 12 zeigt das Anschlussstück 16 separat von den übrigen Bauteilen.

Es ist ersichtlich, dass der Innenkanal 17 zwischen dem ersten Ende 18 und dem zweiten Ende 19 in einem spitzen Winkel geführt ist.

An dem Anschlussstück 16 ist in einer Verlängerung des ersten Endes 18 ein Zapfen 21 ausgebildet. Der Zapfen 21 ist geschlitzt ausgeführt und weist eine Rastnase 22 auf. Der Zapfen 21 ist in Gebrauchsstellung in eine Zapfenaufnahme 23 der Grundplatte einsetzbar, wo er mit der Rastnase 22 mit der Grundplatte 9 verrastet.

Die Zapfenaufnahme 23 bildet somit eine Schwenklagerung für das Anschlussstück 16.

Die Schwenkachse diese Schwenklagerung ist parallel zu der Längsachse des sanitären Einbauteils 8 ausgerichtet, welche in Fig. 1 von oben nach unten verläuft.

Dies wird dadurch erreicht, dass die Zapfenaufnahme 23 parallel zu dieser Längsachse ausgerichtet ist.

Zwischen die Grundplatte 9 und die Einhebel-Mischkartusche 15 ist ein Adapterstück 24 eingesetzt.

Dieses Adapterstück 24 weist an einer ersten Seite 25, der Unterseite, eine Grundplattenaufnahme 26 auf.

Die Grundplattenaufnahme 26 ist komplementär zu der Oberseite 27 der Grundplatte 9 ausgebildet, sodass die Form der Grundplattenaufnahme 26 zu der Form der Oberseite 27 passt.

An einer zweiten Seite 28, an der Oberseite des Adapterstücks 24, ist das bereits erwähnte Verbindungsmittel 14 ausgebildet.

Auf die zweite Seite 28 ist somit die Einhebel-Mischbatterie 15 dicht aufsetzbar.

An der ersten Seite 25 sind Vorsprünge 29 ausgebildet, die in entsprechende Ausnehmungen 30 an der Oberseite 27 der Grundplatte 9 eingreifen, um ein Verdrehen des Adapterstücks 24 relativ zu der Grundplatte 9 zu verhindern.

Das Anschlussstück 16 ist in einem das erste Ende 18 des Innenkanals 17 enthaltenden Anschlussbereich 31 mit einer Anschlussstückaufnahme 32 des Adapterstücks 24 steckverbunden.

Anschlussbereich 31 und Anschlussstückaufnahme 32 bilden eine Schwenklagerung.

Der Zapfen 21 und der Anschlussbereich 31 sind koaxial zueinander ausgerichtet, sodass der Zapfen 21 mit der Zapfenaufnahme 23 und der Anschlussbereich 31 mit der Anschlussstückaufnahme 32 das Schwenklager des Anschlussstücks 16 definieren.

In der Fig. 4 ist ersichtlich, dass in dem Adapterstück eine Schlauchaufnahme 33 für das Kaltwasserschlauchendstück 11 und eine Schlauchaufnahme 34 für das Warmwasserschlauchendstück 13 ausgebildet sind.

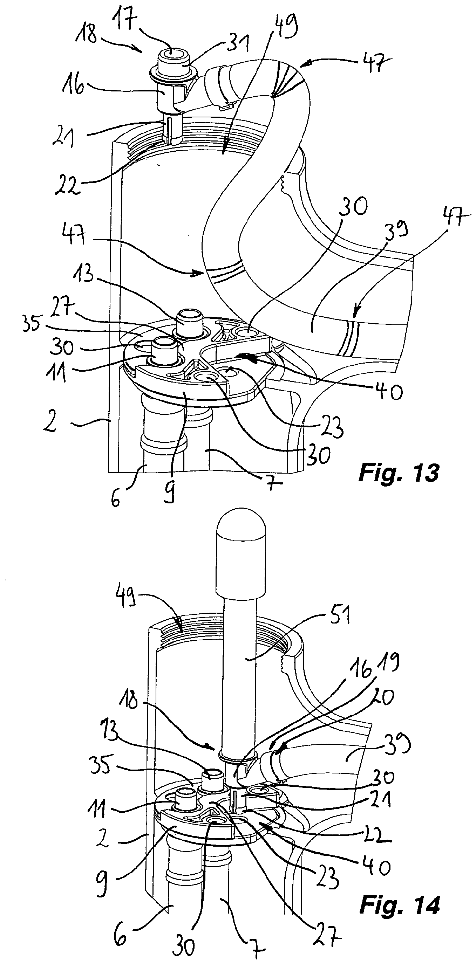

In Fig. 13 ist noch ersichtlich, dass das Kaltwasserschlauchendstück 11 und das Warmwasserschlauchendstück 13 durch Ihre jeweiligen Aufnahmen 10, 12 in der Grundplatte 9 hindurchgesteckt werden.

Anschließend wird zur Sicherung gegen ein Herausfallen quer zur Einsteckrichtung der Schlauchendstücke 11, 13 eine Sicherungsplatte 35 in die Grundplatte 9 eingesetzt.

Diese Sicherungsplatte 35 hintergreift ringförmige Vorsprünge 36 an den Schlauchendstücken 11, 13.

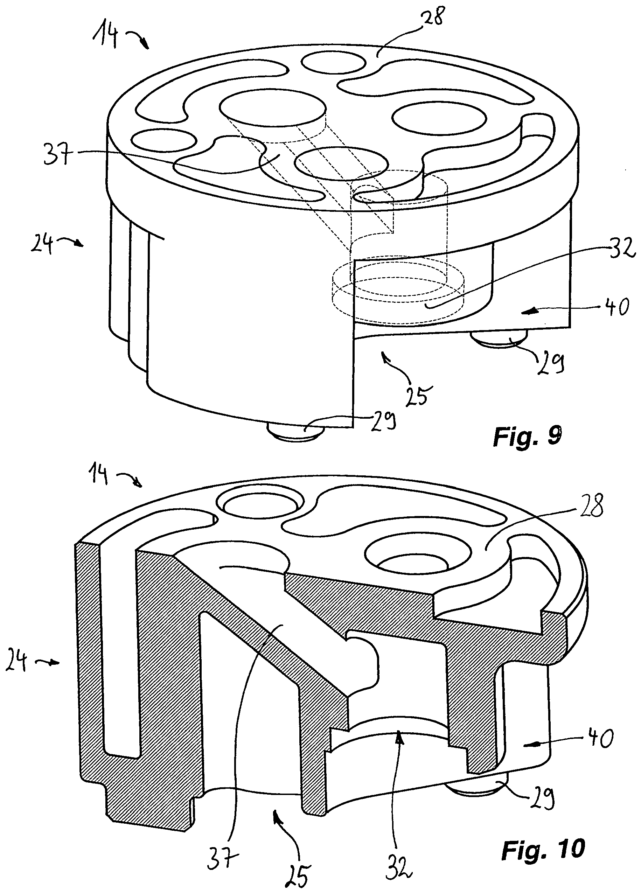

In Fig. 9 und 10 ist erkennbar, dass im Inneren des Adapterstücks 24 ein Verbindungsgang erster Art 37 von der Anschlussstückaufnahme 32 zum Verbindungsmittel 14 geführt ist.

Über diesen Verbindungsgang erster Art 37 ist das Anschlussstück 16 in Gebrauchsstellung an die Einhebel-Mischkartusche 15 angeschlossen.

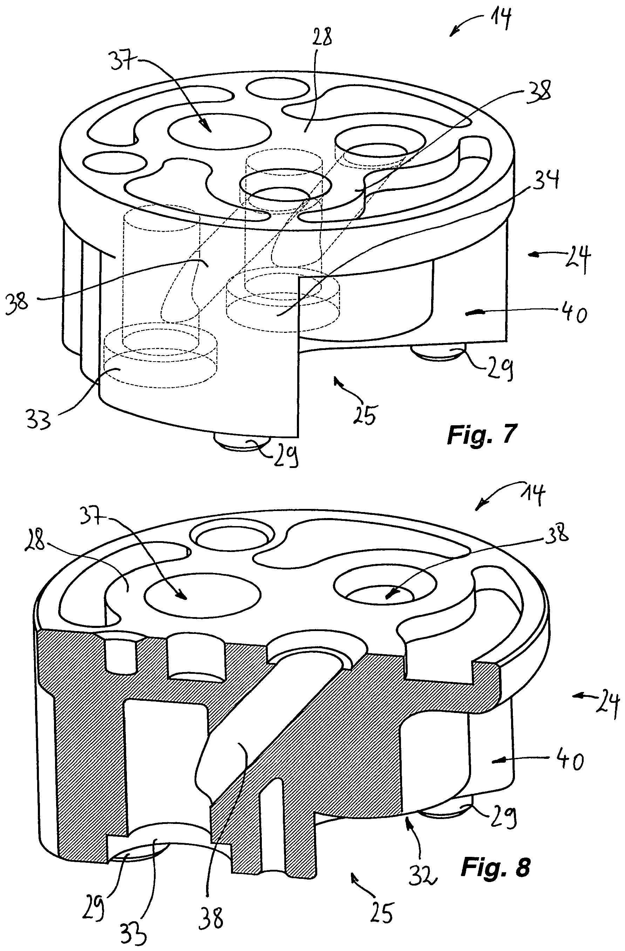

In Fig. 7 und 8 ist erkennbar, dass die Schlauchaufnahmen 33, 34 jeweils über einen Verbindungsgang zweiter Art 38 an das Verbindungsmittel 14 geführt sind.

Die Verbindungsgänge 37, 38 sind jeweils im Inneren des Adapterstücks 16 ausgebildet und verlaufen schräg in Bezug auf die Längsachse des sanitären Einbauteils 8.

Der Verbindungsgang erster Art 37 ist hierbei zwischen den Verbindungsgängen 38 hindurchgeführt und kreuzt diese.

Somit ist der Ausgang der Einhebel-Mischkartusche 15 an den Eingängen der Einhebel-Mischkartusche 15 vorbeigeführt, so dass das Anschlussstück 16 an der dem Auslauf-Mundstück 5 zugewandten Seite des sanitären Einbauteils 8 angeordnet werden kann.

Bei dem beschriebenen Ausführungsbeispiel ist der Schlauchanschluss 20 als Schlauchnippel oder Olive ausgeführt.

Auf den Schlauchanschluss 20 ist ein Verbindungsschlauch 39 aufgesteckt, an dessen freiem Ende das Auslauf-Mundstück 5 befestigt ist.

Bei weiteren Ausführungsbeispielen kann der Schlauchanschluss 20 auch als Ausnehmung ausgebildet sein, in die ein Verbindungsschlauch eingesteckt ist, welcher an seinem anderen Schlauchende an das Auslauf-Mundstück angeschlossen ist.

An der Grundplatte 9 und an dem Adapterstück ist eine keilförmige Aussparung 40 ausgebildet. Die Aussparung 40 begrenzt den verfügbaren Schwenkwinkel für das Anschlussstück 16.

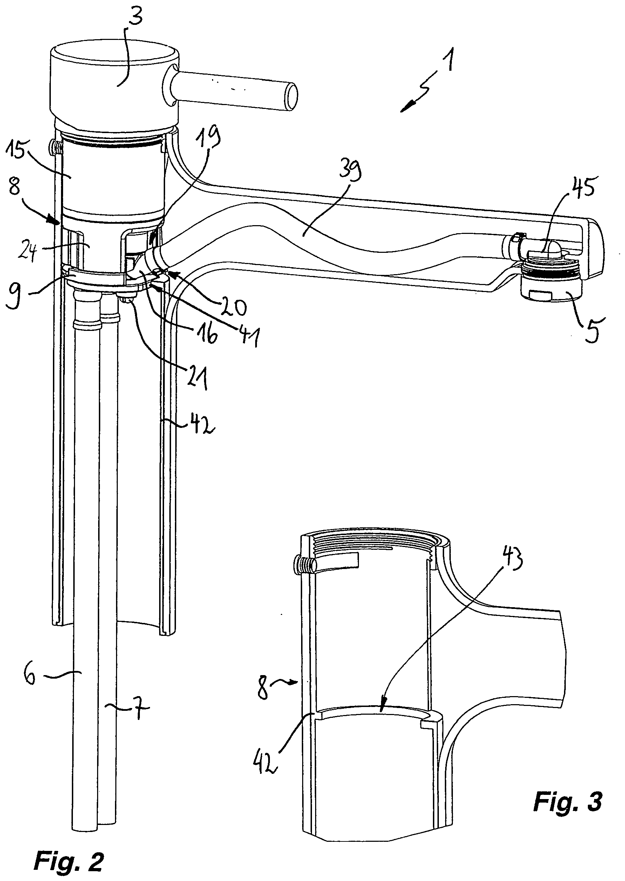

An der Grundplatte 9 ist noch eine unrunde Verdrehsicherung 41 in Form einer Abflachung ausgebildet. Diese wird zu Fig. 2 und 3 näher erläutert.

Fig. 2 und Fig. 3 zeigen ein weiteres Ausführungsbeispiel einer erfindungsgemäßen Sanitärarmatur 1. Konstruktiv und/oder funktionell zu dem vorangegangenen Ausführungsbeispiel gleichartige und/oder ähnliche Bauteile und Funktionseinheiten sind mit denselben Bezugszeichen bezeichnet und nicht noch einmal gesondert beschrieben. Die bisherigen Ausführungen gelten daher entsprechend.

Die Sanitärarmatur 1 gemäß Fig. 2 und Fig. 3 unterscheidet sich von dem zuvor beschrieben Ausführungsbeispiel dadurch, dass der Arm 4 als Schwenkarm ausgebildet ist. Hierzu ist im Inneren der Sanitärarmatur 1 ein feststehendes Rohr 42 angeordnet, um welches der Schwenkarm 4 schwenkbar ist.

Der erreichbare Schwenkbereich ist in an sich bekannter Weise begrenzt.

Die Grundplatte 9 wird in eine Öffnung 43 eingesetzt, die eine unrunde Kontur aufweist. Die Kontur der Grundplatte 9 ist durch die Verdrehsicherung 41 passend auf die Öffnung 43 abgestimmt. Die Verdrehsicherung 41 ist im Ausführungsbeispiel als Abflachung ausgebildet. Bei weiteren Ausführungsbeispielen sind auch Vorsprünge oder Ausnehmungen ausgebildet, um eine unrunde Kontur als Verdrehsicherung 41 bereitzustellen.

Die Grundplatte 9 kann sich somit in der ortsfesten Öffnung 43 nicht drehen. Somit bleibt der gesamte Aufbau auf der Grundplatte 9 ortsfest, wenn der Schwenkarm 4 geschwenkt wird. Lediglich das Anschlussstück 16 folgt der Schwenkbewegung.

Bei den beschriebenen Ausführungsbeispielen sind die Grundplatte 9 und das Adapterstück 16 aus Kunststoff gefertigt, während die Sicherungsplatte 35 aus Metall gefertigt ist.

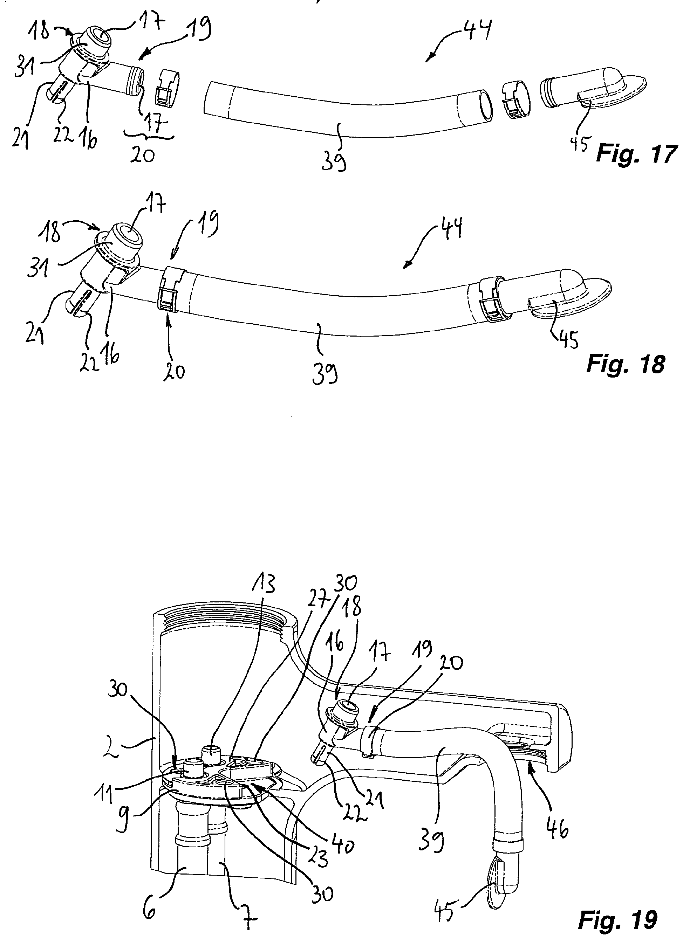

Die Fig. 17 und 18 zeigen eine erfindungsgemäße Innenschlauchanordnung 44 für eine Sanitärarmatur 1, die ein sanitäres Einbauteil 8 und einen flexiblen Verbindungschlauch 39 aufweist.

Der Verbindungsschlauch 39 ist lösbar mit einem Anschlussflansch 45 für das Auslauf-Mundstück 5 und mit dem Anschlussstück 16 verbunden.

Der Anschlussflansch 45 und das Auslauf-Mundstück 5 werden bei der Montage in eine Auslauföffnung 46 des Arms 4 gesetzt.

Die maximale Außenabmessung des Auslauf-Mundstücks 5 und somit die lichte Weite der Auslauföffnung 46 sind hierbei so auf die maximale Außenabmessung des Anschlussstücks 16 abgestimmt, dass das Anschlussstück 16 durch die Auslauföffnung 46 einsetzbar ist.

Um genügend Bewegungsfreiheit zur Verfügung zu haben, weist der Verbindungsschlauch 39 mehrere faltenbalgartig gefaltete Axialabschnitte 47 auf. Durch diese Axialabschnitte 47 ist der Verbindungsschlauch nach Bedarf reversibel längenveränderbar und knickbar.

Den beschriebenen Ausführungsbeispielen ist gemeinsam, dass die Sanitärarmatur 1 eine Einhebel-Mischkartusche 15, eine ersten Aufnahme 10 für ein Kaltwasserschlauchendstück 11 und eine zweiten Aufnahme 12 für ein Warmwasserschlauchendstück 13 sowie ein Auslauf-Mundstück 5 aufweist. Das Auslauf-Mundstück 5 ist hierbei durch einen flexiblen Verbindungsschlauch 39 über ein Anschlussstück 16 mit der Einhebel-Mischkartusche 15 verbunden.

Es sei noch erwähnt, dass in die Schlauchaufnahmen 33, 34 und in die Anschlussstückaufnahme 32 jeweils ein Dichtring 52 eingesetzt wird, vgl. Fig. 4.

Fig. 11 bis 16 zeigen eine erste Montagereihenfolge für eine erfindungsgemäße Innenschlauchanordnung 44, wenn die Auslauföffnung 46 zu eng für das Anschlussstück 16 ist.

Zunächst wird der Verbindungsschlauch 39 mit einer flexiblen Einfädelhilfe 48 durch die Auslauföffnung 46 in den Armaturenkörper 2 hinein und durch die Mischeröffnung 49 aus diesem herausgeführt, Fig. 11.

Anschließend wird das Anschlussstück 16 mit einer Schlauchklemme 50 an dem Verbindungsschlauch 39 befestigt, Fig. 12.

In einem nächsten Schritt wird die Grundplatte 9 in die Öffnung 43 durch die Mischeröffnung 49 eingesetzt. Nun wird das Anschlussstück 16 in die Mischeröffnung 49 eingesetzt. Der Verbindungsschlauch 39 wird hierbei an den vorgesehenen Axialabschnitten 47 reversibel geknickt, Fig. 13.

Der Zapfen 21 wird in die Zapfenaufnahme 23 gesteckt. Hierbei wird ein stabförmiges Werkzeug 51 verwendet, Fig. 14.

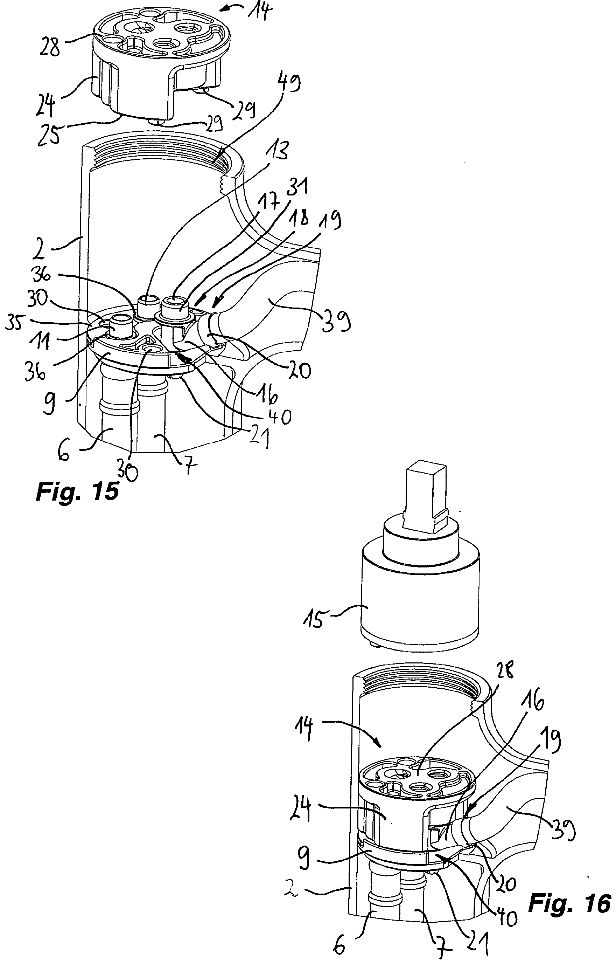

Nun wird das Adapterstück 24 durch die Mischeröffnung 49 auf die Grundplatte 9 aufgesetzt, Fig. 15.

Anschließend wird die Einhebel-Mischkartusche 15 in die Mischeröffnung 49 eingesetzt und befestigt, Fig. 16.

Die überschüssige Länge des Verbindungsschlauchs 39 wird hierbei durch die Axialabschnitte 47 und/oder durch eine gewundene Schlauchführung aufgenommen.

Fig. 19 bis 23 zeigen eine alternative Möglichkeit, eine erfindungsgemäße Innenschlauchanordnung 44 nach Fig. 17 und 18 in eine Sanitärarmatur 1 einzubauen.

Aus Fig. 17 und 18 ist ersichtlich, dass die maximale Außenabmessung des Anschlussstücks 16 kleiner ist als die maximale Außenabmessung des Anschlussflansches 45. Somit passt das Anschlussstück 16 durch jede Öffnung, in die der Anschlussflansch 45 mit dem Auslauf-Mundstück 5 einsetzbar ist.

In einem ersten Schritt wird die Innenschlauchanordnung 44 vormontiert: Das Anschlussstück 16 und der Anschlussflansch 45 werden mit dem Verbindungsschlauch 39 verbunden, Fig. 18.

In einem zweiten Schritt wird die Innenschlauchanordnung 44 durch die Auslauföffnung 46 in den Armaturenkörper 2 eingefädelt. Dabei wird das Anschlussstück 16 zuerst eingeführt, Fig. 29. Die Grundplatte 9 ist hierbei bereits in die Öffnung 43 eingelegt und mit den Schlauchendstücken 11, 13 verbunden.

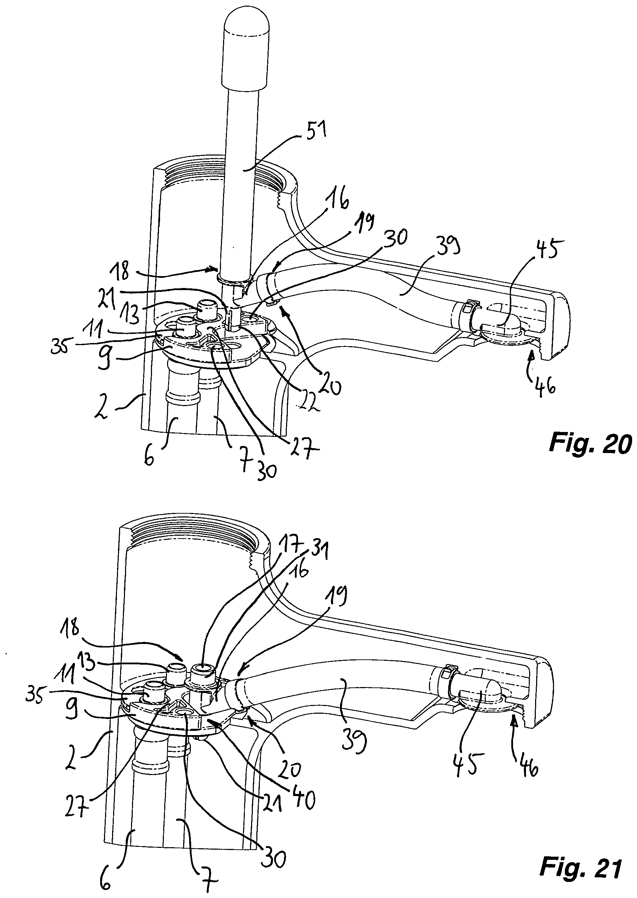

Anschließend wird das Anschlussstück mit dem stabförmigen Werkzeug 51 an dem Anschlussbereich 31 gegriffen, Fig. 20.

Nun wird der Zapfen 21 in die Zapfenaufnahme 23 eingesteckt, Fig. 21.

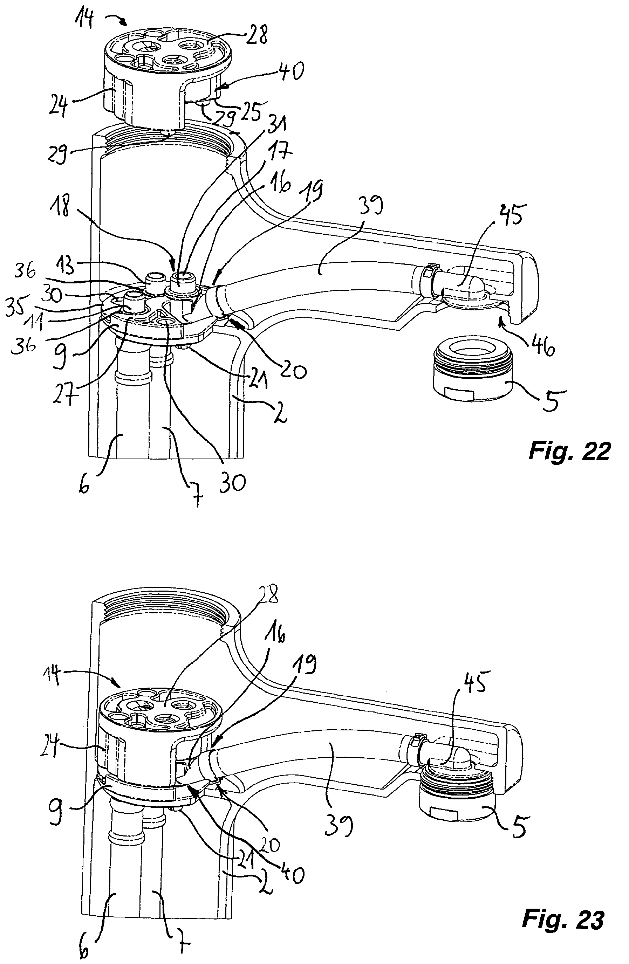

Die Länge des Verbindungsschlauches 39 ist so bemessen, dass der Anschlussflansch 45 in der Auslauföffnung 46 anliegt, wenn der Zapfen 21 in die Zapfenaufnahme 23 gesteckt ist, Fig. 22.

Schließlich wird das Auslauf-Mundstück 5 eingeschraubt, Fig. 23, und die Einhebel-Mischkartusche 15 in die Mischeröffnung 49 eingesetzt (vgl. Fig. 16).

Bei einem sanitären Einbauteil 8 mit einem Verbindungsmittel 14 zur Verbindung mit einer Einhebel-Mischkartusche 15 wird vorgeschlagen, ein Anschlussstück 16 mit einem Schlauchanschluss 20 an einer Grundplatte 9 schwenkbar anzuordnen, wobei die Grundplatte 9 Aufnahmen 10, 12 für einen Kaltwasserschlauchendstück 11 und ein Warmwasserendstück 13 aufweist.

### Bezugszeichenliste

- 1: Sanitärarmatur
- 2: Armaturenkörper
- 3: Handhebel
- 4: Arm
- 5: Auslauf-Mundstück
- 6: Kaltwasserschlauch
- 7: Warmwasserschlauch
- 8: sanitäres Einbauteil
- 9: Grundplatte
- 10: erste Aufnahme
- 11: Kaltwasserschlauchendstück
- 12: zweite Aufnahme
- 13: Warmwasserschlauchendstück
- 14: Verbindungsmittel
- 15: Einhebel-Mischkartusche
- 16: Anschlussstück
- 17: Innenkanal
- 18: erstes Ende
- 19: zweites Ende
- 20: Schlauchanschluss
- 21: Zapfen
- 22: Rastnase
- 23: Zapfenaufnahme
- 24: Adapterstück
- 25: erste Seite
- 26: Grundplattenaufnahme
- 27: Oberseite
- 28: zweite Seite
- 29: Vorsprung
- 30: Ausnehmung
- 31: Anschlussbereich
- 32: Anschlussstückaufnahme
- 33, 34: Schlauchaufnahme
- 35: Sicherungsplatte
- 36: Vorsprung
- 37: Verbindungsgang erster Art
- 38: Verbindungsgang zweiter Art
- 39: Verbindungsschlauch
- 40: Aussparung
- 41: Verdrehsicherung
- 42: Rohr
- 43: Öffnung
- 44: Innenschlauchanordnung
- 45: Anschlussflansch
- 46: Auslauföffnung
- 47: Axialabschnitt
- 48: Einfädelhilfe
- 49: Mischeröffnung
- 50: Schlauchklemme
- 51: Werkzeug
- 52: Dichtring

## Patentansprüche

1. Sanitäres Einbauteil (8) mit einer Grundplatte (9), die eine erste Aufnahme (10) für ein Kaltwasserschlauchendstück (11) und eine zweite Aufnahme (12) für ein Warmwasserschlauchendstück (13) aufweist, und mit einem Adapterstück (24), das an einer ersten Seite (25) eine Grundplattenaufnahme (26) für die Grundplatte (9) aufweist und an einer zweiten Seite (28) als vorzugsweise planes Verbindungsmittel (14) zum Anschluss einer Einhebel-Mischkartusche (15) ausgebildet ist, wobei an der Grundplatte (9) ein Anschlussstück (16) schwenkbar befestigt ist, welches einen Innenkanal (17) aufweist, der an einem ersten Ende (18) an dem Verbindungsmittel (14) und an einem zweiten Ende (19) an einem Schlauchanschluss (20) mündet, wobei das Anschlussstück (16) in einem das erste Ende (18) des Verbindungskanals (17) enthaltenden Anschlussbereich (31) mit dem Verbindungsmittel (14) über eine Anschlussstückaufnahme (32) des Adapterstücks (24) steckverbunden ist, welcher Anschlussstückaufnahme (32) ein zum Verbindungsmittel (14) mündender Verbindungsgang erster Art (37) zugeordnet ist, und wobei den Schlauchaufnahmen (33, 34) je ein zum Verbindungsmittel mündender Verbindungsgang zweiter Art (38) zugeordnet ist, **dadurch gekennzeichnet, dass** der Verbindungsgang erster Art (37) in dem Adapterstück windschief kreuzend zu den Verbindungsgängen zweiter Art (38) verläuft.

2. Sanitäres Einbauteil (8) nach Anspruch 1, **dadurch gekennzeichnet, dass** der Innenkanal (17) zwischen dem ersten Ende (18) und dem zweiten Ende (19) in einem Winkel geführt ist.

3. Sanitäres Einbauteil (8) nach Anspruch 1 oder 2, **dadurch gekennzeichnet, dass** an dem Anschlussstück (16), vorzugsweise in einer Verlängerung des ersten Endes (18), ein vorzugsweise geschlitzter und mit einer Rastnase (22) versehener Zapfen (21) ausgebildet ist, welcher mit einer passenden Zapfenaufnahme (23) der Grundplatte (9) eine Schwenklagerung bildet, und dass die Zapfenaufnahme (23) parallel zu einer Längsachse des sanitären Einbauteils (8) ausgerichtet ist.

4. Sanitäres Einbauteil (8) nach einem der Ansprüche 1 bis 3, **dadurch gekennzeichnet, dass** die Anschlussstückaufnahme (32) als Schwenklager für das Anschlussstück (16) ausgebildet ist und/oder dass der Zapfen (21) und der Anschlussbereich (31) des Anschlussstücks (16) zueinander koaxial ausgerichtet sind.

5. Sanitäres Einbauteil (8) nach einem der Ansprüche 1 bis 4, **dadurch gekennzeichnet, dass** an der Grundplatte (9) eine quer zu einer Einsteckrichtung des Kaltwasserschlauchendstücks (11) und des Warmwasserschlauchendstücks (13) einsetzbare Sicherungsplatte (35) angeordnet ist.

6. Sanitäres Einbauteil (8) nach einem der Ansprüche 1 bis 5, **dadurch gekennzeichnet, dass** der Schlauchanschluss (20) als Schlauchnippel oder Olive ausgebildet ist und/oder dass die Schlauchaufnahmen (33, 34) und/oder die Anschlussstückaufnahme (32) jeweils einen Dichtring (52) aufweist/aufweisen.

7. Sanitäres Einbauteil (8) nach einem der Ansprüche 1 bis 6, **dadurch gekennzeichnet, dass** an der Grundplatte (9) und/oder dem Adapterstück (24) eine vorzugsweise keilförmige Aussparung (40) ausgebildet ist, welche einen verfügbaren Schwenkwinkel für das Anschlussstück (16) begrenzt, und/oder dass an der Grundplatte (9) eine vorzugsweise unrunde Verdrehsicherung (41) ausgebildet ist.

8. Sanitäres Einbauteil (8) nach einem der Ansprüche 5 bis 7, **dadurch gekennzeichnet, dass** die Grundplatte (9) und/oder das Adapterstück (24) aus Kunststoff gefertigt ist/sind und/oder dass die Sicherungsplatte (35) aus Metall gefertigt ist.

9. Innenschlauchanordnung (44) für eine Sanitärarmatur (1), mit einem sanitären Einbauteil (8), nach einem der Ansprüche 1 bis 8, **dadurch gekennzeichnet, dass** an den Schlauchanschluss (20) des sanitären Einbauteiles (8) ein flexibler Verbindungschlauch (39) angeschlossen ist.

10. Innenschlauchanordnung (44) nach dem vorangehenden Anspruch, **dadurch gekennzeichnet, dass** an einem vom Schlauchanschluss (33, 34) abgewandten Ende des Verbindungsschlauchs (39) ein Auslauf-Mundstück (5) vorzugsweise lösbar angeschlossen ist und/oder dass eine maximale Außenabmessung des Auslauf-Mundstücks (5) auf eine maximale Außenabmessung des Anschlussstücks (16) abgestimmt ist.

11. Innenschlauchanordnung (44) nach einem der Ansprüche 9 oder 10, **dadurch gekennzeichnet, dass** der Verbindungsschlauch (39) wenigstens einen längenveränderbaren und/oder knickbaren, insbesondere faltenbalgartig gefalteten, Axialabschnitt (47) aufweist.

## Claims

1. Sanitary fixture (8) having a base plate (9) which has a first receptacle (10) for a cold-water hose end piece (11) and a second receptacle (12) for a hot-water hose end piece (13), and having an adapter piece (24) that has, on a first side (25), a base-plate receptacle (26) for the base plate (9) and, on a second side (28), a preferably planar connecting means (14) for connecting a single-lever mixing cartridge (15), wherein a connection piece (16) is pivotably fastened to the base plate (9), said connection piece (16) having an internal duct (17) that leads, at a first end (18), to the connecting means (14) and, at a second end (19), to a hose connector (20), wherein the connection piece (16) is connected to the connecting means, in a connection region (31) containing the first end (18) of the connecting duct (17), via a connection-piece receptacle (32) of the adapter piece (24) by way of a plug-in connection, which connection-piece receptacle (32) is assigned a connecting passage of a first kind (37) that leads to the connecting means (14), and wherein the hose receptacles (33, 34) are each assigned a connecting passage of a second kind (38) that leads to the connecting means, **characterized in that** the connecting passage of the first kind (37) extends in the adapter piece in a skew manner intersecting the connecting passages of the second kind (38).

2. Sanitary fixture (8) according to Claim 1, **characterized in that** the internal duct (17) is guided at an angle between the first end (18) and the second end (19).

3. Sanitary fixture (8) according to Claim 1 or 2, **characterized in that** a pin (21) that is preferably slotted and/or provided with a detent (22) is formed on the connection piece (16), preferably in an extension of the first end (18), said pin forming a pivotable mounting with a matching pin receptacle (23) of the base plate (9), and **in that** the pin receptacle (23) is oriented parallel to a longitudinal axis of the sanitary fixture (8).

4. Sanitary fixture (8) according to one of Claims 1 to 3, **characterized in that** the connection-piece receptacle (32) is in the form of a pivot bearing for the connection piece (16), and/or **in that** the pin (21) and the connection region (31) of the connection piece (16) are oriented coaxially with one another.

5. Sanitary fixture (8) according to one of Claims 1 to 4, **characterized in that** a securing plate (35) that is insertable transversely to a plug-in direction of the cold-water hose end piece (11) and the hot-water hose end piece (13) is arranged on the base plate (9).

6. Sanitary fixture (8) according to one of Claims 1 to 5, **characterized in that** the hose connection (20) is in the form of a hose nipple or olive, and/or **in that** the hose receptacles (33, 34) and/or the connection-piece receptacle (32) has/have in each case a sealing ring (52).

7. Sanitary fixture (8) according to one of Claims 1 to 6, **characterized in that** a preferably wedge-shaped cutout (40) is formed in the base plate (9) and/or in the adapter piece (24), said cutout (40) delimiting an available pivoting angle for the connection piece (16), and/or **in that** a preferably non-round rotation prevention means (41) is formed on the base plate (9).

8. Sanitary fixture (8) according to one of Claims 5 to 7, **characterized in that** the base plate (9) and/or the adapter piece (24) is/are produced from plastics material, and/or **in that** the securing plate (35) is produced from metal.

9. Internal hose arrangement (44) for a sanitary fitting (1), having a sanitary fixture (8) according to one of Claims 1 to 8, **characterized in that** a flexible connecting hose (39) is connected to the hose connection (20) of the sanitary fixture (8).

10. Internal hose arrangement (44) according to the preceding claim, **characterized in that** an outlet mouthpiece (5) is connected preferably in a detachable manner to an end, remote from the hose connection (33, 34), of the connecting hose (39), and/or **in that** a maximum outside dimension of the outlet mouthpiece (5) is coordinated with a maximum outside dimension of the connection piece (16) .

11. Internal hose arrangement (44) according to either of Claims 9 and 10, **characterized in that** the connecting hose (39) has at least one variable-length and/or bendable axial portion (47) that is folded in particular in the manner of a bellows.

## Revendications

1. Pièce d'insertion sanitaire (8) comprenant une plaque de base (9), qui présente un premier logement (10) pour un embout de tuyau d'eau froide (11) et un second logement (12) pour un embout de tuyau d'eau chaude (13), et comprenant une pièce d'adaptateur (24), qui présente sur un premier côté (25) un logement de plaque de base (26) pour la plaque de base (9) et qui est réalisée sur un second côté (28) sous la forme d'un moyen d'assemblage de préférence plan (14) pour le raccordement d'une cartouche de mélange à un levier (15), dans laquelle une pièce de raccordement (16) est fixée de façon pivotante à la plaque de base (9) et présente un canal intérieur (17), qui débouche par une première extrémité (18) au niveau du moyen d'assemblage (14) et par une seconde extrémité (19) au niveau d'un raccord de tuyau (20), dans laquelle la pièce de raccordement (16) est connectée par engagement au moyen d'assemblage (14) par un logement de pièce de raccordement (32) de la pièce d'adaptateur (24) dans une région de raccordement (31) contenant la première extrémité (18) du canal de liaison (17), logement de pièce de raccordement (32) auquel est associé un passage de liaison du premier type (37) qui débouche au niveau du moyen d'assemblage (14), et dans laquelle un passage de liaison du second type (38) qui débouche au niveau du moyen d'assemblage est chaque fois associé aux logements de tuyau (33, 34), **caractérisée en ce que** le passage de liaison du premier type (37) s'étend dans la pièce d'adaptateur en croisement gauche par rapport aux passages de liaison du second type (38).

2. Pièce d'insertion sanitaire (8) selon la revendication 1, **caractérisée en ce que** le canal intérieur (17) est conduit avec un coude entre la première extrémité (18) et la seconde extrémité (19).

3. Pièce d'insertion sanitaire (8) selon la revendication 1 ou 2, **caractérisée en ce qu'**un pivot (21) de préférence fendu et pourvu d'un ergot d'encliquetage (22) est formé sur la pièce de raccordement (16), de préférence dans un prolongement de la première extrémité (18), et forme avec un logement de pivot adapté (23) de la plaque de base (9) un palier de pivotement, et **en ce que** le logement de pivot (23) est orienté parallèlement à un axe longitudinal de la pièce d'insertion sanitaire (8).

4. Pièce d'insertion sanitaire (8) selon l'une quelconque des revendications 1 à 3, **caractérisée en ce que** le logement de pièce de raccordement (32) est réalisé sous la forme d'un palier de pivotement pour la pièce de raccordement (16), et/ou **en ce que** le pivot (21) et la région de raccordement (31) de la pièce de raccordement (16) sont orientés de façon coaxiale l'un par rapport à l'autre.

5. Pièce d'insertion sanitaire (8) selon l'une quelconque des revendications 1 à 4, **caractérisée en ce qu'**une plaque de fixation (35) insérable transversalement à une direction d'engagement de l'embout de tuyau d'eau froide (11) et de l'embout de tuyau d'eau chaude (13) est disposée sur la plaque de base (9).

6. Pièce d'insertion sanitaire (8) selon l'une quelconque des revendications 1 à 5, **caractérisée en ce que** le raccord de tuyau (20) est formé par un mamelon de tuyau ou une olive, et/ou **en ce que** les logements de tuyau (33, 34) et/ou le logement de pièce de raccordement (32) présente(nt) chacun un anneau d'étanchéité (52).

7. Pièce d'insertion sanitaire (8) selon l'une quelconque des revendications 1 à 6, **caractérisée en ce qu'**une découpe (40) de préférence en forme de coin est formée sur la plaque de base (9) et/ou la pièce d'adaptateur (24) et limite un angle de pivotement disponible pour la pièce de raccordement (16), et/ou **en ce qu'**un blocage de rotation de préférence non circulaire (41) est formé sur la plaque de base (9).

8. Pièce d'insertion sanitaire (8) selon l'une quelconque des revendications 5 à 7, **caractérisée en ce que** la plaque de base (9) et/ou la pièce d'adaptateur (24) est (sont) fabriquée(s) en matière plastique, et/ou **en ce que** la plaque de fixation (35) est fabriquée en métal.

9. Système de tuyau interne (44) pour une robinetterie sanitaire (1), comprenant une pièce d'insertion sanitaire (8) selon l'une quelconque des revendications 1 à 8, **caractérisé en ce qu'**un tuyau de connexion flexible (39) est raccordé au raccord de tuyau (20) de la pièce d'insertion sanitaire (8).

10. Système de tuyau interne (44) selon la revendication précédente, **caractérisé en ce qu'**une embouchure de sortie (5) est raccordée de préférence de façon amovible à une extrémité du tuyau de connexion (39) qui est située à l'opposé du raccord de tuyau (33, 34), et/ou **en ce qu'**une dimension extérieure maximale de l'embouchure de sortie (5) est accordée à une dimension extérieure maximale de la pièce de raccordement (16).

11. Système de tuyau interne (44) selon l'une des revendications 9 ou 10, **caractérisé en ce que** le tuyau de connexion (39) présente au moins une partie axiale (47) de longueur variable et/ou pliable, en particulier pliée à la manière d'un soufflet plissé.
